Europäisches Patentamt

European Patent Office

Office européen des brevets

(11) Veröffentlichungsnummer: **0 056 978**

**A1**

(12) **EUROPÄISCHE PATENTANMELDUNG**

(21) Anmeldenummer: 82100376.1

(51) Int. Cl.³: **B 60 P 3/32**

(22) Anmeldetag: 20.01.82

(30) Priorität: 22.01.81 DE 3101981

(43) Veröffentlichungstag der Anmeldung:
04.08.82 Patentblatt 82/31

(84) Benannte Vertragsstaaten:
AT BE CH DE IT LI NL SE

(71) Anmelder: Gutzeit, Jürgen
Wackerstrasse 34
D-8990 Lindau (B)(DE)

(72) Erfinder: Gutzeit, Jürgen
Wackerstrasse 34
D-8990 Lindau (B)(DE)

(74) Vertreter: Riebling, Günther Dr.-Ing., Dipl.-Ing.,
Ing.grad. et al,
Rennerle 10
D-8990 Lindau(DE)

(54) Nutzfahrzeug mit in Längsrichtung ausfaltbarem Heck-Anbauteil.

(57) Das Nutzfahrzeug mit in Längsrichtung ausfaltbarem Heck-Anbauteil (5) ist als Wohnmobil, Campinganhänger, Lastkraftwagen od. dgl. geeisgnet. Das Heck-Anbauteil (5) besteht aus einem am Heck des Fahrzeuges befestigten Anbaurahmen (3), und einer die Rückseite des Heckanbauteils bildenden Rückwand, sowie aus einem ziehharmonikaartig auseinanderfaltbaren Faltboden, wobei zwischen dem Anbaurahmen und der Rückwand eine geschlossene Plane angeordnet ist.

Der Anbaurahmen (3) ist lösbar und abnehmbar mit dem Heck (2) des Fahrzeuges verbunden, wobei zum Ein- und Ausfahren der Rückwand ein motorisch betriebener Seilzug oder eine hydraulisch verschwenkbare Hubstrebe vorgesehen sind.

FIG 1

------------------------------------------------------------

Nutzfahrzeug mit in Längsrichtung ausfaltbarem
Heck-Anbauteil

------------------------------------------------------------

Die Erfindung bezieht sich auf ein Nutzfahrzeug mit in Längsrichtung ausfaltbarem Heck-Anbauteil, insbesondere Wohnmobil, Campinganhänger, Lastkraftwagen oder dgl., das aus einem am Heck des Fahrzeuges befestigten Anbaurahmen und einer die Rückseite des Heck-Anbauteils bildenden Rückwand besteht, sowie aus einem ziehharmonikaartig auseinanderfaltbarem Faltboden, wobei zwischen dem Anbaurahmen und der Rückwand eine geschlossene, einen separaten Raum definierende Plane angeordnet ist.

Die Anbringung eines in Längsrichtung ausfaltbaren Heck-Anbauteiles an ein Nutzfahrzeug , insbesondere an einem Wohnmobil oder Campinganhänger, wird durchgeführt, um die zur Verfügung stehende Nutzfläche zu vergrößern.

Es ist ein Nutzfahrzeug mit in Längsrichtung ausfaltbarem Heck-Anbauteil bekannt (GB-PS 1 265 oo3) , bei dem das Heck-Anbauteil in angebautem Zustand fest und unlösbar mit dem Heck des Fahrzeuges verbunden ist. Bei dieser bekannten Anordnung wird die Hecktür des Fahrzeuges entfernt und die sich hierdurch ergebende Heköffnung durch Aussägen oder Ausschneiden vergrößert, um das ausfaltbare Heck-Anbauteil in eingeschobenem und eingefaltenen Zustand teilweise im Innenraum des Fahrzeuges unterzubringen.

Eine derartige Konstruktion hat den Nachteil, daß das Nutzfahrzeug nur stets mit dem Heck-Anbauteil verwendet werden kann, was insbesondere auf Campingplätzen (Stellplätzen) nachteilig ist. Um den Stellplatz zu verlassen, muß das Heck-Anbauteil ausgeräumt werden und in Längsrichtung eingefahren und mit dem Nutzfahrzeug verriegelt werden, damit
das Nutzfahrzeug verwendet werden kann. DerGebrauchszweck
des Nutzfahrzeuges ist hierdurch also stark eingeschränkt,
ebenso wie der Handhabungsaufwand beim Aufbau und Abbau
des Heck-Anbauteils.

Auch mit dem Gegenstand der DE-OS 2 836 551 ist es bekannt,
die Hecktür des Fahrzeuges zu entfernen, die hierdurch entstehende Hecköffnung konstruktiv zu vergrößern, um darin
einen entsprechend ausklappbaren und teilweise ausfaltbaren
Anbau anzubringen. Der Anbau ist wiederum fest und unlösbar
mit dem Heck des Fahrzeuges verbunden, wodurch die oben
beschriebenen Nachteile entstehen.

Gleiches gilt auch für den Gegenstand der FR-PS 1 293 652,
nachdem dort das Heck-Anbauteil nicht ausfaltbar, sondern
teleskopierbar im Nutzfahrzeug gelagert ist. Es müssen hier
wesentliche konstruktive Änderungen im Nutzfahrzeug vorgenommen werden, um die entsprechenden Teleskopführungen vorzunehmen. Gleiches gilt auch für den Gegenstand der FR-PS
53 871.

Die Erfindung hat sich ausgehend von dem Gegenstand der
GB-PS 1 265 oo3 die Aufgabe gestellt, ein dort gezeigtes
Nutzfahrzeug so weiterzubilden, daß der Gebrauchszweck
wesentlich verbessert wird, d.h., daß das Heck-Anbauteil
auch getrennt von dem Nutzfahrzeug verwendbar ist.

Zur Lösung der gestellten Aufgabe ist die Erfindung
dadurch gekennzeichnet , daß der Anbaurahmen lösbar und
abnehmbar mit dem Heck des Fahrzeuges verbunden ist,und
daß zum Ein- und Ausfahren der Rückwand ein motorisch betriebener Seilzug vorgesehen ist.

Wesentliches Merkmal der Erfindung ist also, daß das gesamte Heck-Anbauteil leicht lösbar mit dem Heck des Fahrzeuges verbunden ist. Auf diese Weise ist es möglich, mit dem Nutzfahrzeug und mit dem daran angebauten Heck-Anbauteil in zusammengefaltetem Zustand einen Stellplatz, z.B. einen Campingplatz anzufahren und das Heck-Anbauteil durch den motorisch betriebenen Seilzug auszufahren und zu arretieren. Will man nun mit dem Nutzfahrzeug den Stellplatz verlassen, so ist es nach der Erfindung nicht mehr notwendig, das Heck-Anbauteil zusammenzufalten und mit dem Nutzfahrzeug zu verbinden. Nach der Erfindung ist es vielmehr vorgesehen, daß das Heck-Anbauteil über die leicht lösbare Halterung vom Heck des Fahrzeuges gelöst wird und als separates, ausfahrbares Teil vom Nutzfahrzeug getrennt auf dem Stellplatz stehenbleibt. Das Nutzfahrzeug kann bestimmungsgemäss ohne das Heck-Anbauteil verwendet werden, und die Gegenstände aus dem Heck-Anbauteil brauchen nicht ausgeräumt zu werden. Das Heck-Anbauteil kann als separates Wohnabteil auf dem Stellplatz stehenbleiben ; es kann zum Schlafen oder Kochen dienen , oder als Wetterschutzhütte , wobei das Nutzfahrzeug nach wie vor seinem bestimmungsgemässen Gebrauch zugeführt werden kann. Es ergeben sich also wesentliche Vorteile mit den Merkmalen nach der Erfindung, denn das umständliche Ein- und Ausfalten des Heck-Anbauteils beim vorübergehenden Verlassen des Stellplatzes entfällt. Zusätzlich ist auch die Benutzung des Nutzfahrzeuges erleichtert, denn das daran angesetzte Heck-Anbauteil braucht nicht stets mit dem Nutzfahrzeug (z.B. im Winter) verbunden zu bleiben.

Weiterer Vorteil der Erfindung ist, daß keine wesentlichen Eingriffe am Nutzfahrzeug zur Anbringung des Heck-Anbauteiles vorgenommen werden müssen. Es entfallen so einschneidende, konstruktive Änderungen am Nutzfahrzeug, wie z.B. Entfernen der Hecktür und mechanische Vergrößerung der sich hierdurch ergebenden Öffnung, weil nach der Erfindung die Hecktür des Nutzfahrzeuges und alle anderen Teile am Heck des Fahrzeuges bleiben, und lediglich eine leicht lösbare Halterung am Heck des Fahrzeuges angebracht

4

wird, die eine Verbindung mit dem Heck-Anbauteil erlaubt.

Nach dem Gegenstand des Anspruches 3 wird es hierbei bevorzugt, wenn die lösbare Halterung zwischen dem Heck-Anbauteil und dem Heck des Fahrzeuges aus einer am Heck des Fahrzeuges angeordneten C-förmig profilierten Schiene besteht, in die ein Keder (Profilstreifen) eingreift, der mit der Plane des Heck-Anbauteils verbunden ist, wobei an den Seitenflächen zwischen dem Fahrzeug und der Plane ein Reißverschluß angeordnet ist. Im Bodenbereich wird also die Verbindung zwischen dem Heck des Fahrzeuges und dem Heck-Anbauteil über den Eingriff eines Profilstreifens in eine zugeordnet profilierte Schiene erreicht, während der Deckelbereich und die Seitenflächen über leicht lösbare Reißverschlüsse miteinander verbunden werden können. Es liegt jedoch im Belieben des Fachmannes, hier andere, leicht lösbare Verbindungsmittel zu finden, wie z.B. Bajonettverschlüsse, Schnappverschlüsse oder Magnetleisten.

Eine Vereinfachung des Gebrauchszwecks des Heck-Anbauteils ergibt sich nach dem Gegenstand des Anspruches 2 auch dadurch, daß die Rückwand im eingefalteten Zustand des Heck-Anbauteils über Schnellverschlüsse mit dem Heck bzw. mit den Seitenflächen des Fahrzeuges verbunden ist. Es ergibt sich hiermit eine hochbelastbare, seitenwindunempfindliche Einheit des Heck-Anbauteils mit dem Fahrzeug, wobei das Auseinanderfalten des Heck-Anbauteils sehr einfach durch Lösen der Schnellverschlüsse erfolgt, wonach die Rückwand des Heck-Anbauteils über den motorisch betriebenen Seilzug ausgezogen wird.

Die Anbringung des Seilzuges kann auf verschiedene Arten erfolgen. Zunächst ist es nach dem Gegenstand des Anspruches 5 vorgesehen, daß die Seiltrommel desSeilzuges an der Rückwand des Heck-Anbauteils angeordnet ist, wobei das andere Ende des Seils am nicht-faltbaren Teil des Faltbodens angeordnet ist.

Ferner ist es nach dem Gegenstand des Anspruches 6 vorgesehen, daß die Seiltrommel am Anbaurahmen des Heck-Anbauteils angeordnet ist, wobei das andere Ende des Seils am beweglichen Schwenkpunkt des Faltbodens angreift.

Mit dem erfindungsgemässen Gedanken ist es nun auf einfache Weise möglich, den Nutzraum eines Fahrzeuges - entsprechend der Länge des Anbaus - auf eine beliebige, größere Fläche zu erweitern. Zum Ausfalten des Anbaus wird es hierbei in einer weiteren Ausführungsform bevorzugt, wenn ein knickbarer oder teleskopierbarer Spindelantrieb vorgesehen ist. Ebenso können in ansich bekannter Weise hydraulische Antriebe, Kettenantriebe sowie Seilzugantriebe verwendet werden. Ebenso ist es in einer Weiterbildung nach der Erfindung vorgesehen, daß das Ausfahren bzw. Ausfalten des Anbaus dadurch erleichtert wird, daß an der hinteren Rückwand Stützrollen oder Stützfüsse angeordnet sind, die höhenverstellbar sind.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.
Alle in den Unterlagen offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von mehrere Ausführungsbeispiele darstellenden Zeichnungen näher erläutert. Hierbei gehen aus den Zeichnungen und ihrer Beschreibung weitere erfindungswesentliche Merkmale und Vorteile der Erfindung hervor.

Es zeigen:

Fig. 1 schematisiert gezeichnet die Rückansicht eines
Fahrzeuges mit eingefaltetem Heck-Anbauteil;

Fig. 2 schematisiert gezeichnet die Seitenansicht des
Fahrzeuges nach Fig. 1 während des Ausfaltens des
Heck-Anbauteils;

Fig. 3 schematisiert gezeichnete Teilansicht des Fahrzeuges
nach den Figuren 1 und 2 mit teilweise ausgefaltetem
Anbau und Darstellung weiterer Einzelheiten;

Fig. 4 Darstellung der dachseitigen Halterung zwischen
Heckanbauteil und Heck des Fahrzeuges;

Fig. 5 bodenseitige Halterung des Anbaus am Heck des Fahrzeuges in der Seitenansicht;

Fig. 6 schematisiert in der Seitenansicht und teilweise
im Schnitt ein weiterer Heckanbauteil mit motorisch
betriebenem Seilzug in ausgefahrenem Zustand;

Fig. 7 gleiche Darstellung wie Fig. 6 im halb eingefahrenen
Zustand;

Fig. 8 gleiche Darstellung wie Fig. 6 kurz vorErreichen
des voll eingefahren Zustandes;

Fig. 9 zweites Ausführungsbeispiel eines motorisch betriebenen Seilzuges;

Fig.10 zweites Ausführungsbeispiel eines motorisch betriebenen Seilzuges;

Fig.11 viertes Ausführungsbeispiel eines motorisch betriebenen Seilzuges;

Fig. 12 und 13 schematisiert in der Seitenansicht und teilweise im Schnitt ein Heckanbauteil mit hydraulischem Antrieb im aus- und eingefahrenen Zustand.

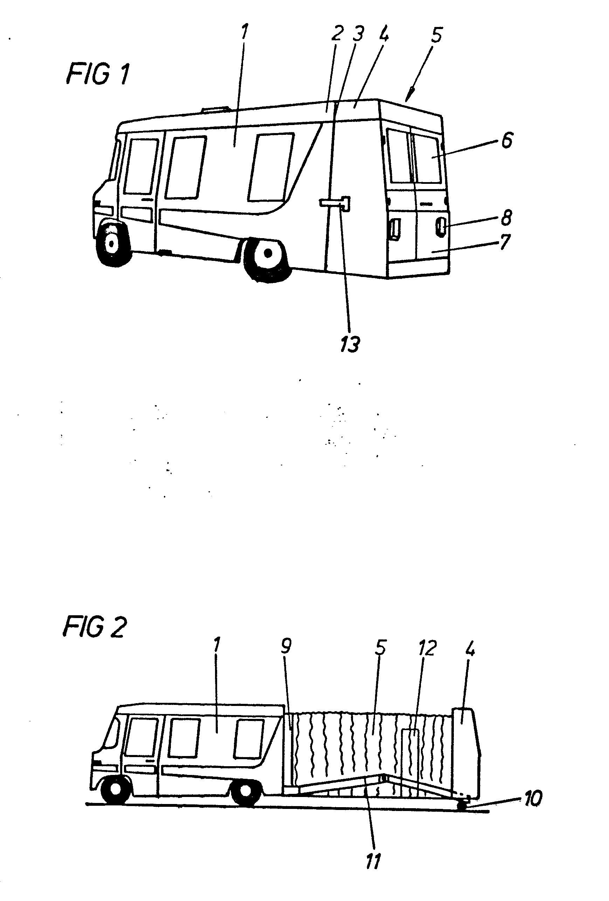

Die Figuren 1 und 2 zeigen die Ausführungsformen eines Fahrzeuges 1 als Wohnmobil. Am Heck 2 dieses Fahrzeuges 1 ist ein Anbaurahmen 3 angeordnet, der aus einem umlaufenden, fahrzeugseitig befestigten Rahmen besteht. Das in Fig. 1 eingefaltete Heckanbauteil 5 ist in der rückseitigen Rückwand 4 versenkt eingefaltet, wobei die Rückwand 4 mit Hilfe von Schnellverschlüssen 13 mit der rückseitigen Halterung 3 am Fahrzeug 1 verschmutzungsgesichert und abdichtend verbunden ist.

Die Figur 1 zeigt ferner, daß die Rückwand 4 des Heckanbauteils 5 eine Hecktür 7 und Rückfenster 6 aufweist. Ferner sind Schlußleuchten 8, sowie das Kennzeichen vorgesehen.

Am Aufstellungsort des Fahrzeuges 1 wird das Heckanbauteil 5 gemäss Fig. 2 ausgefaltet.

Hierbei werden die Schnellverschlüsse 13 zwischen der Rückwand 4 des Heckanbauteils 5 und dem Anbaurahmen 3 am Fahrzeug 1 gelöst, so daß die gesamte Rückwand 4 in Richtung der Längsachse des Fahrzeuges 1 nach hinten gezogen werden kann.

Zur Erleichterung des Ausziehens sind am hinteren, unteren Ende der Rückwand 4 entsprechende Stützrollen 1o vorgesehen.

Die Fig. 2 zeigt schematisiert in der Seitenansicht einen Faltboden 11, der aus zwei gelenkig miteinander verbundenen Bodenplatten besteht. Das Heckanbauteil 5 ist in seinem Dach- und Seitenteil zeltartig ausgebildet und ist mit Hilfe einer lösbaren Halterung 9 am Heck 2 des Fahrzeugs lösbar angeschlossen.

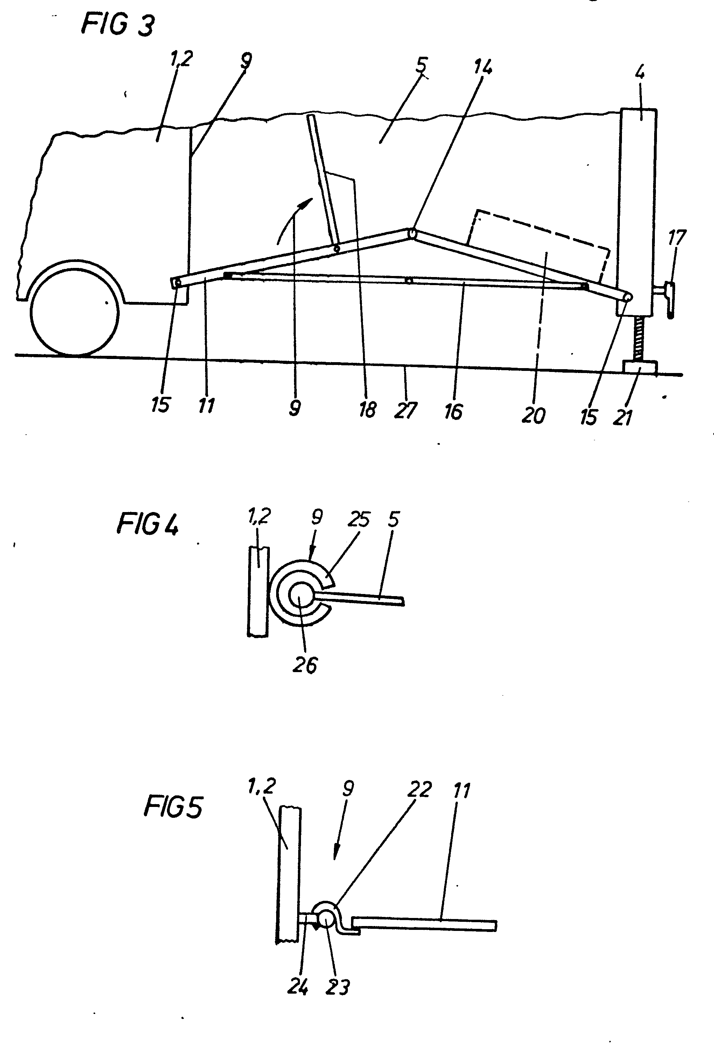

Dieser lösbare Anschluß hat den wesentlichen Vorteil, daß das Fahrzeug 1 ohne das Heckanbauteil 5 den Aufstellungsort verlassen kann, was insbesondere auf Campingplätzen wichtig ist. Das Heckanbauteil 5 bleibt dann allein am Aufstellungsort stehen. Eine solche schnell-lösbare Halterung 9 kann beispielsweise durch einen umlaufenden Reißverschluß oder einen umlaufenden Keder, der in eine Hohlprofilschiene 25 gemäss Fig. 4 eingreift, gebildet sein.

Im Heckanbauteil 5 können noch ferner Reißverschlüsse 12 oder entsprechende Fenster vorgesehen sein.

Fig. 3 zeigt weitere Einzelheiten des Heckanbauteils, schematisiert in der Seitenansicht.

Hier ist ersichtlich, daß der Faltboden 11 aus zwei über das Gelenk 14 miteinander verbundenen Bodenplatten besteht, wobei diese Bodenplatten selbst über Gelenke 15 einerseits am Fahrzeug 1 und andererseits am Anbaurahmen 4 des Heck- anbauteils 5 angreifen. Zur Erleichterung des Ausfaltens dieses Faltbodens ist schematisiert eine Knickspindel 16 in der Art eines Kniehebel-Wagenhebers gezeigt, der mit einer nicht näher dargestellten Stellmutter an dem Faltboden 11 angreift, und der über eine Handkurbel 17 betätigt werden kann.

Ferner ist ersichtlich, daß die Rückwand 4 mit höhenverstellbaren Stellfüssen 21 ausgebildet ist.

Auf den begehbaren Teil des Faltbodens 11 sind ein oder mehrere Klappwände 18 angeordnet, die in Pfeilrichtung 19 aufgestellt werden können. Ebenfalls sind Betten 2o auf dem Faltboden 11 angeordnet, so daß das umständliche Umräumen von Einrichtungsgegenständen vom Fahrzeug in das Heckanbauteil 5 entfällt.

Fig. 4 zeigt als Beispiel eine Kederbefestigung als Halterung 9 zwischen dem Heckanbauteil 5 und dem Heck 2 des Fahrzeuges 1.

Hierbei greift ein mit dem Anbau verbundener Keder 26 in das Hohlprofil einer im Querschnitt C-förmigen Schiene 25 ein, die an dem Heck 2 des Fahrzeuges 1 befestigt ist.

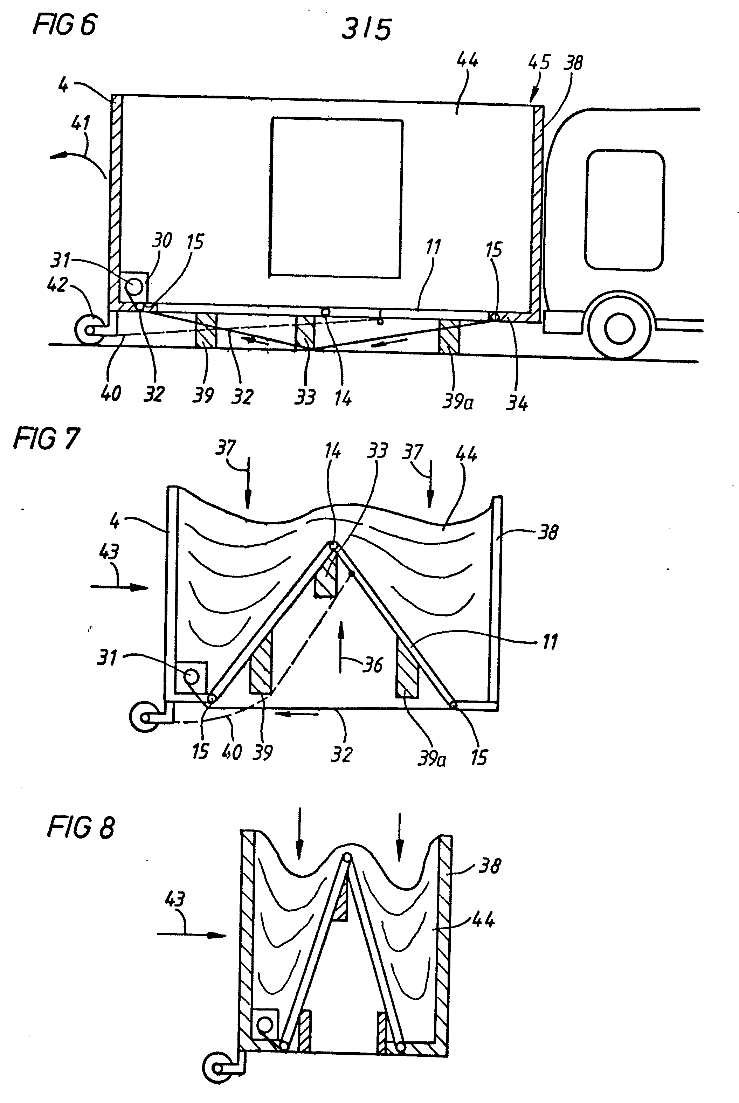

Fig. 5 zeigt als andere Ausführungsform die Befestigung des Faltbodens 11 am Heck 2 des Fahrzeuges 1. Hier ist am Heck 2 über eine Halterung 24 ein horizontal umlaufendes Rundprofil 23 angeordnet, wobei am vorderen Ende des Faltbodens 11 mehrere im Abstand nebeneinander befindliche Einhängehaken angeordnet sind, die von oben in das Rundprofil 23 mindestens teilweise übergreifen.

In nicht näher dargestellter Weise kann das dem Heck 2 des Fahrzeuges 1 zugewandte Ende des Faltbodens 11 mit ausklappbaren Stützfüssen versehen werden, damit bei der Abkoppelung

des Heckanbauteils 5 vom Heck 2 des Fahrzeuges 1 das Heckanbauteil 5 waagrecht auf der Aufstellungsebene 27 abgestellt werden kann.

Unter den Erfindungsgedanken der vorliegenden Erfindung fällt auch die Ausführungsform, daß das Dachteil und die Seitenwände des Heckanbauteils 5 nicht aus einem zeltartigen Material bestehen, sondern aus festen und gelenkig miteinander verbundenen Platten, die in der gleichen Art wie der Faltboden 11 auseinanderklappbar und spannbar sind.

Fig. 6 zeigt das erste Ausführungsbeispiel eines Antriebes zum Zusammenschieben und Auseinanderfahren des Heckanbauteils 35. Das Heckanbauteil 35 besteht im wesentlichen aus dem fahrzeugseitig angebrachten Anbaurahmen 38, dem senkrecht hierzu angeordneten Faltboden 11 und der parallel zum Anbaurahmen 38 angeordneten, hinteren Rückwand 4. Der Faltboden 11 besteht aus zwei gelenkig aneinander angelenkten Platten, wobei die Platten durch die Gelenke 15,14, 15 miteinander verbunden sind. Der Antrieb besteht aus einem Seilzug, der eine Seiltrommel 31 aufweist, die drehbar und motorisch angetrieben in einem Kasten 30 befestigt ist, der seinerseits an der Innenseite der Rückwand 4 befestigt ist. Das Seil 32 wird über eine nicht näher dargestellte Umlenkrolle an der Unterseite des Faltbodens entlanggeführt und gleitet über einen Auflagebock 33, der sich senkrecht nach unten vom Faltboden 11 erstreckt, damit das Seil die notwendige Winkelstellung erhält, um eine schräge Zugkomponente auf den Faltboden zu erzeugen , um ein Zusammenklappen des Faltbodens 11 gemäss Fig. 7 und 8 zu ermöglichen. Am Faltboden 11 sind ferner noch gelenkig Stützfüsse 39, 39a angeordnet, die eine Abstützung des Faltbodens 11 bei ausgefaltetem Heckanbauteil 35 gemäss Fig. 6 gegenüber dem Boden gestatten.

An der Unterseite der Rückwand 4 ist eine Stützrolle 42 angeordnet, welche den hinteren Teil des Heckanbauteils 35 gegenüber dem Boden abstützt. Die Oberseite des Heckanbauteils 35 wird durch eine Plane 44 abgedeckt, in der entsprechende Fenster oder Türausschnitte angeordnet sein können.

Nach Fig. 7 wird beim Antrieb der Seiltrommel 31 das Seil 32 in der eingezeichneten Pfeilrichtung verkürzt, wodurch eine schräge Zugkraftkomponente auf das mittlere Gelenk 14 ausgeübt wird, und der Faltboden 11 in Pfeilrichtung 36 nach oben klappt. Gleichzeitig bildet die Plane 44 sackartige Taschen, die in die gezeigten Aufnahmeräume des Heckanbauteils hineinfallen. Der rechte Aufnahmeraum ist durch den Anbaurahmen 38 und den rechten Teil des Faltbodens 11 gegeben, während der linke Aufnahmeraum durch die Rückwand 4 und den linken Teil des Faltbodens 11 definiert ist. Die hintere Rückwand 4 fährt damit in Pfeilrichtung 43 in Richtung auf den fahrzeugseitig angebrachten Anbaurahmen 38, wobei sich die Stützfüsse 39, 39a vertikal nach unten verschwenken, nachdem sie in nicht näher dargestellter Weise gelenkig und arretierbar an der Unterseite des Faltbodens 11 gelagert sind.

Die Fig. 6 und 7 zeigen, daß noch ein weiteres Seil 4o vorhanden ist, das einerseits am schwenkbaren , rechten Teil des Faltbodens 11 und andererseits an der Strebe befestigt ist, an welcher die Stützrolle 42 ansetzt. In Fig. 6 ist dieses Seil 40 gespannt und damit wird die Rückwand 4 in der Art eines zweiarmigen Hebels in Pfeilrichtung 41 aufgerichtet. Dieses Seil dient also zum Spannen und vertikalen Aufrichten der Rückwand 4. Gemäss Fig. 7 wird das Seil 40 beim Verkürzen des Seils 32 entspannt, so daß die Rückwand 4 jetzt um das Gelenk 15 herum schwenkbar ist. In Fig. 7 dient das Seil 4o noch zur Arretierung der Stützfüsse 39, damit sich diese beim Verschwenken des Faltbodens 11 in Pfeilrichtung 36 auch in die geforderte, vertikale Lage einstellen und das Zusammenklappen des Faltbodens nicht behindern.

Die Fig. 8 zeigt die fast zusammengeklappte Stellung des Heckanbauteils 35. Es ist sichtbar, daß die Rückwand 4 noch weiter in Pfeilrichtung 43 in Richtung auf den fahrzeugseitig angebrachten Anbaurahmen 38 bewegt wurde. Gleichfalls wurde die Plane 44 in Pfeilrichtung 37 noch weiter in die hierfür vorgesehenen Aufnahmetaschen des Heckanbauteils eingelegt.

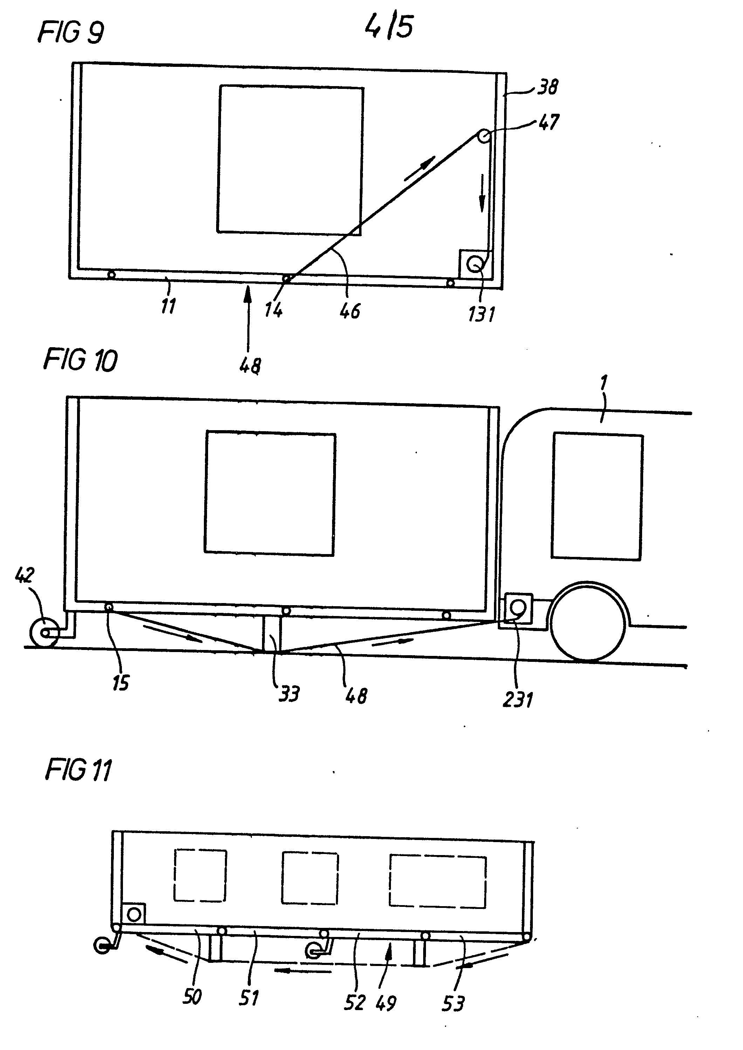

Die Fig. 9 zeigt ein weiteres Ausführungsbeispiel eines Antriebes. Hierbei ist die Seiltrommel 31 an der Innenseite des Anbaurahmens 38 auf dem festen Teil des Faltbodens 11 angebracht, wobei das Seil 46 über eine Umlenkrolle 47 geführt ist.

Fig. 10 zeigt die weitere Ausführungsform eines solchen Antriebes. Hierbei ist die Seiltrommel 231 im Heck, etwa im Bereich der Stoßstange des Fahrzeuges1 angebracht. Das Seil 32 wird wiederum über einen Auflagebock 33 geführt, wobei im Auflagebock nicht näher dargestellte Gleitrollen vorhanden sind, um eine entsprechende Reibung am Auflagebock 33 zu vermeiden.

Fig. 11 zeigt, daß auch ein mehrfach gefalteter Faltboden vorhanden sein kann. Der Faltboden 49 besteht hierbei aus den Platten 5o,51,52 , 53, die ziehharmonikaartig zusammengefaltet werden können. Das Seil 32 ist über entsprechende Auflageböcke 33 geführt. Am Faltboden sind zwei Stützräder angebracht.

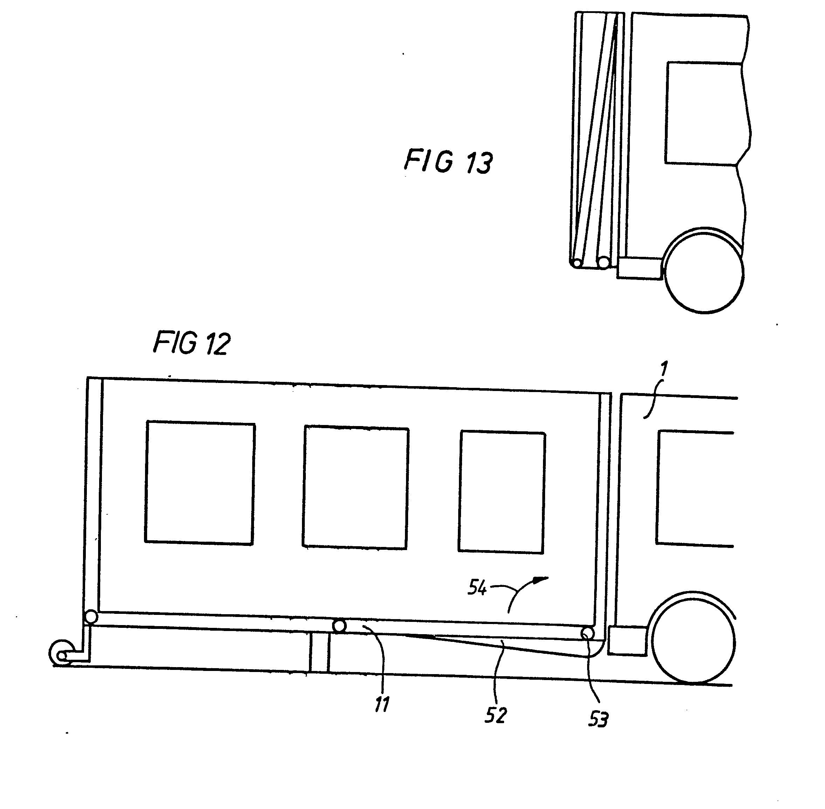

Die Fig. 12 und 13 zeigen, daß nicht nur ein Zusammenfalten des Heckanbauteils über einen motorisch angetriebenen Seilzug erfolgen kann, sondern auch über eine hydraulische Hubstrebe 45. Solche hydraulischen Hubstreben 45 werden vor allem als automatische Ladeplattformen bei Lastkraftwagen verwendet. Bei einem solchen mit einer Hubstrebe 45 ausgerüsteten Lastkraftwagen ist der Antrieb zum Zusammenschieben und Auseinanderfalten des Heckanbauteils 35 besonders einfach ausgebildet. Die Hubstrebe 45 trägt den Faltboden 11 auf ihrer Oberseite. Sie ist hierbei im Schwenkpunkt 55 am Fahrzeug 1 gelagert und wird über nicht näher dargestellte hydraulische Betätigungsglieder in Pfeilrichtung 54 sowie in Gegenrichtung hierzu verschwenkt. Nachdem der Faltboden 11 mit seinem rechten Teil auf der Hubstrebe 45 befestigt ist, erfolgt das Zusammenfalten des Heckanbauteils einfach dadurch, daß die Hubstrebe 45 in Pfeilrichtung 54 nach oben verschwenkt wird, wodurch der Faltboden in seinen Gelenken 14,15 zusammenklappt und die in Fig. 13 dargestellte Lage einnimmt.

0056978

G 994-31-ku
11.1.1982

Anmelder: Herr Jürgen Gutzeit, Postfach 22, 8990 Lindau

----------------------------------------------------------------

P a t e n t a n s p r ü c h e

1. Nutzfahrzeug mit in Längsrichtung ausfaltbarem Heck-Anbauteil (5,45), insbesondere Wohnmobil, Campinganhänger, Lastkraftwagen oder dgl., das aus einem am Heck (2) des Fahrzeugs (1) befestigten Anbaurahmen (3,38) und einer die Rückseite des Heck-Anbauteils (5,45) bildenden Rückwand (4) besteht, sowie aus einem ziehharmonikaartig auseinanderfaltbaren Faltboden (11), wobei zwischen dem Anbaurahmen (3,38) und der Rückwand (4) eine geschlossene, einen separaten Raum definierende Plane (44) angeordnet ist, d a d u r c h   g e k e n n z e i c h n e t , daß der Anbau-rahmen (3,38) lösbar und abnehmbar mit dem Heck (2) des Fahrzeugs (1) verbunden ist und daß zum Ein- und Ausfahren der Rückwand (4) ein motorisch betriebener Seilzug (31,33; 131,231) vorgesehen ist.

2. Nutzfahrzeug nach Anspruch 1, d a du r c h   g e k e n n z e i c h n e t , daß die Rückwand (4) im eingefalteten Zustand des Heck-Anbauteils (5) über Schnellverschlüsse (13) mit dem Heck (2) bzw. mit den Seitenflächen des Fahrzeuges (1) verbunden ist.

3. Nutzfahrzeug nach einem der Ansprüche 1 oder 2, d a d u r c h   g e k e n n z e ic h n e t , daß die lösbare Halterung (9) zwischen dem Heck-Anbauteil (5,45) und dem Heck (2) des Fahrzeuges (1) aus einer am Heck des Fahrzeugs (1) angeordneten C-förmig profilierten Schiene (5) besteht, in die ein Keder (26) eingreift , der mit der Plane (44) des Heckanbauteils (5,45) verbunden ist, und daß an den Seitenflächen zwischen Fahrzeug (1) und Plane (44) ein Reißverschluß angeordnet ist.

4. Nutzfahrzeug nach einem der Ansprüche 1 - 3,
d a d u r c h   g e k e n n z e i c h n e t , daß das Auseinanderfalten des Heckanbauteils (5) durch eine mit einer
Stellmutter versehenen Knickspindel (16) erfolgt.

5. Nutzfahrzeug nach einem der Ansprüche 1 - 3,
d a d u r c h   g e k e n n z e i c h n e t , daß das Auseinanderfalten des Heck-Anbauteils (45) durch den motorisch
betriebenen Seilzug erfolgt, dessen Seiltrommel (31) an
der Rückwand (4) des Heck-Anbauteils (45) angeordnet ist,
wobei das andere Ende des Seils (32) am nicht-faltbaren
Teil des Faltbodens (11) angeordnet ist, (Fig. 6 - 8).

6. Nutzfahrzeug nach einem der Ansprüche 1 - 5,
d a d u r c h   g e k e n n z e i c h n e t , daß die Seiltrommel (131) am Anbaurahmen (38) des Heck-Anbauteils (45)
angeordnet ist , wobei das andere Ende des Seils (32)
am beweglichen Schwenkpunkt (46) des Faltbodens (11) angreift, (Fig. 9).

7. Nutzfahrzeug nach einem der Ansprüche 1 - 5,
d a d u r c h   g e k e n n z e i c h n e t , daß die
Seiltrommel (231) am Heck (2) des Fahrzeugs (1) angeordnet
ist und daß das andere Ende des Seils (32) am Gelenk (15)
des Faltbodens (11) an der Rückwand (4) angreift.

8. Nutzfahrzeug nach einem der Ansprüche 1 - 5,
d a d u r c h   g e k e n n z e i c h n e t , daß die Rückwand (4) in der Art eines zweiarmigen Hebels schwenkbar
(Gelenk 15) am hinteren Teil des Faltbodens (11) angeordnet
ist und daß zur vertikalen Ausrichtung der Rückwand (4) im ausgefalteten Zustand des Heck-Anbauteils (5,45) ein zweites Seil (40) vorgesehen ist, das mit einem Ende an einem freien schwenkbaren Hebelstück der Rückwand (4) und mit seinem anderen Ende am schwenkbaren Teil des Faltbodens (11) ansetzt.

FIG 1

FIG 2

**FIG 3**

**FIG 4**

**FIG5**

0056978

FIG 6

315

FIG 7

FIG 8

FIG 9

38

47

11    14    46    131

48

FIG 10

1

42

15    33    48    231

FIG 11

50    51    52    49    53

515

0056978

FIG 13

FIG 12

1

54

11

52

53

**Europäisches Patentamt**

**EUROPÄISCHER RECHERCHENBERICHT**

EP 82 10 0376.1

| | EINSCHLÄGIGE DOKUMENTE | | KLASSIFIKATION DER ANMELDUNG (Int. Cl.3) |
|---|---|---|---|
| Kategorie | Kennzeichnung des Dokuments mit Angabe, soweit erforderlich, der maßgeblichen Teile | betrifft Anspruch | |
| X,Y | US - A - 3 257 760 (CALTHORPE) <br> * Spalte 1, Zeilen 44 bis 49; Fig. 1 bis 12 * <br> -- | 1 | B 60 P 3/32 |
| Y | DE - A1 - 2 923 041 (WOHN-ART-FREIZEIT-ARTIKEL GMBH) <br> * Fig. 1 bis 3 * <br> --- | 1 | |
| A | DE - U - 1 784 072 (RAULINE) <br> * Fig. 3 bis 5 * <br> -- | 1,2 | **RECHERCHIERTE SACHGEBIETE (Int. Cl.3)** |
| A | GB - A - 2 009 056 (OLSEN-DESIGN) <br> -- | | B 60 P 3/00 <br> B 62 D 33/00 |
| A | US - A - 3 888 539 (NIESSNER) <br> --- | | |
| D,A | DE - A1 - 2 836 551 (HARDENBERG) <br> -- | | |
| D,A | FR - A - 1 293 652 (CAÏTUCOLI) <br> -- | | |
| D,A | FR - E - 53 871 (BERGER) <br> -- | | |
| D,A | GB - A - 1 265 003 (SINCLAIR) <br> ---- | | |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 15-03-1982 | LUDWIG |

EPA form 1503.1   06.78